# EUROPEAN PATENT SPECIFICATION

(11) **EP 3 700 072 B1**
(45) Date of publication and mention of the grant of the patent: **24.08.2022**
(21) Application number: 20158581.7
(22) Date of filing: 20.02.2020
(51) Int. Cl.: H02M 1/10, H02M 1/42, H02J 7/02

(54) **AC-DC PFC CONVERTER FOR SINGLE-PHASE AND THREE-PHASE OPERATION**
WECHSELSTROM/GLEICHSTROM-PFC-WANDLER FÜR EINPHASEN- UND DREIPHASENBETRIEB
CONVERTISSEUR CA/CC À PFC POUR UNE UTILISATION MONOPHASÉE ET TRIPHASÉE

(30) Priority: 22.02.2019 ES 201930153
(43) Date of publication of application: 26.08.2020
(73) Proprietor: Broad Telecom S.A., 28918 Madrid (ES)
(72) Inventor: ESCRIBANO NAVALPOTRO, Lorenzo, 28918 Madrid (ES); LÁZARO BLANCO, Antonio, 28918 Madrid (ES); GUTIÉRREZ ESCRIBANO, Rubén, 28918 Madrid (ES); BARRADO BAUTISTA, Andrés, 28918 Madrid (ES)
(74) Representative: Hoffmann Eitle

(56) References cited:
- EP-A1- 3 648 322
- CN-U- 207 124 568
- JP-A- 2016 116 432

## Description

### Object of the Invention

The present invention generally relates to converters for converting alternating current to direct current with power factor correction.

More specifically, one object of the invention is to provide a versatile converter which can be indistinctly connected to a single-phase or three-phase alternating current source to convert it to direct current, and furthermore with high-performance and low-noise operation.

The invention is particularly applicable in power supply devices integrated in portable electronic equipment, such as for example television signal transmitters, battery recharging equipment, etc.

### State of the Art

Some rectifier circuits used for converting alternating current to direct current implement a power factor correction (PFC) to reduce the effects of harmonic currents and thereby achieve a more efficient energy conversion.

More specifically, in a converter with PFC the input alternating current signal is forced to be in phase and proportional with the input AC voltage, which decreases the harmonics and extracts the maximum power available from the AC line.

Furthermore, converters with PFC are known not to have a rectifier bridge at the input, whereby increasing efficiency of the converter and reducing its cost. A known type of bridgeless converter with power factor correction are those using "totem-pole" topology for the AC/DC rectifier, in which two switching devices, such as for example MOSFETs, are placed one on top of another and connected in series, and at the same time connected in parallel with two return diodes. A "totem-pole" rectifier has the advantages of: reducing of power losses during switching the switches, thereby increasing conversion efficiency, and reducing noise and electromagnetic interferences.

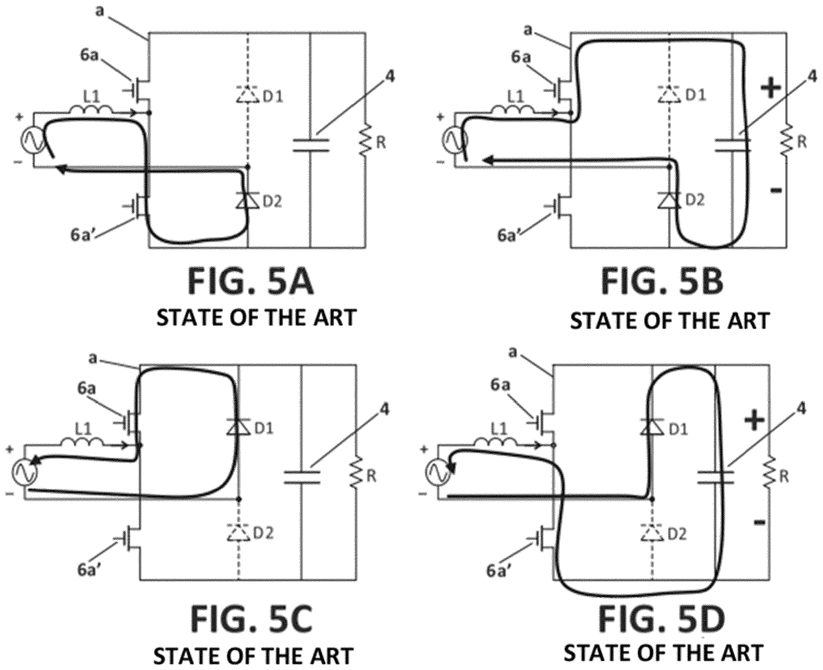

In "totem-pole" topology, a first switching device operates like an active switch and forms a main current circuit with a diode, whereas a second switching device operates like a return switch. The functions of the active and return switches change as the input voltage changes between positive and negative cycles. **Figure 5** shows the operation of a "totem-pole" rectifier already known in the state of the art.

North American patent publications US 2015/0180330 A1 and US 2012/0069615 A1 describe respective examples of rectifiers with "totem-pole" topology with power factor correction PFC.

Moreover, portable electronic equipment generally integrates a power supply which is connected to an alternating current energy source available in the location where the equipment is going to be used and converts it into direct current for powering various electronic systems of the equipment. This portable equipment is prepared for being connected to either a single-phase or a three-phase current source, depending on the rated power of the equipment.

Since this type of portable equipments is taken to a number of locations, there is the drawback that sometimes only one single-phase or three-phase AC line type is available, which is incompatible with the type of power for which the equipment is prepared, so the equipment cannot be connected to the available alternating current source. This is the case, for example, of mobile television transmission units, or the case of electric vehicles that need to be recharged.

Therefore, a need for rectifiers which, simply and economically, can indistinctly operate connected to single-phase and three-phase alternating current lines has been detected in this technical field.

The European patent application EP-3.648.322 A1, which is prior art under Art. 54(3) EPC, refers to an on-board charger including a power factor corrector, that can be indistinctly connected to a single-phase or three-phase alternating current source.

The Chinese Utility model CN-207124568 discloses a voltage conversion circuit that can be indistinctly connected to a single-phase or three-phase alternating current source.

The Japanese patent application JP-2016 116432 A, discloses an AC machine driving apparatus including a converter circuit which converts an AC voltage from an AC power supply into a DC voltage.

### Description of the Invention

The invention solves the drawback set forth above by providing a bridgeless converter with power factor correction capable of operating indistinctly with single-phase and three-phase lines, as defined in the independent claim 1.

The converter of the invention comprises an input having three connection poles that can be indistinctly connected to a single-phase or three-phase current source using for that purpose a type of connector suited to each case, and a direct current output with a positive pole and another negative pole. The converter further comprises a three-phase boost rectifier connected between the input and the output of the rectifier, and two one-way conduction devices, preferably diodes, connected in anti-parallel to the output of the rectifier and to the output of the converter.

The three-phase rectifier is conventionally formed by three branches connected to one another in parallel and connected with the two poles of the output of the converter, wherein each branch has two semiconductor switching devices, such as MOSFET or IGBT transistors, connected to one another in series.

Furthermore, to raise the output voltage, the three-phase rectifier conventionally has a coil at the input of each branch, i.e., connected to the central point between the two electronic switching devices.

The converter further comprises electrical connection means, such as for example a switch with two or more single pole double throw switches which can be switched at the same time, such as a relay for example. These connection means are connected for reconfiguring the connection between the poles of the input of the converter and the rectifier depending on the type of alternating current line connected at the input of the converter, such that the rectifier can rectify a single-phase or three-phase current.

The rectifier can thereby operate in two modes:
- single-phase mode, wherein the input of each branch of the rectifier (central point between the two semiconductor switching devices) is connected with one and the same pole of the input (in the case of single-phase lines with phase and neutral, or with two input poles in the case of two-pole single-phase lines). Preferably, each branch operates in "totem-pole" configuration such that the return of the current is performed through one-way conduction devices (diodes).
- three-phase mode, wherein each input pole is connected respectively with the central point (between the two switching devices) of each branch of the rectifier, and the bridge operates conventionally as a boost rectifier, preferably by means of PWM (pulse width modulation) control. The central point between the two one-way conductors is not connected (is electrically isolated).

The electrical connection means can be configured and connected in multiple ways to obtain those two connection and operation modes of the rectifier, using at least two single pole double throw switches switching at the same time. The present invention encompasses any manner of carrying out those two connection modes.

In a preferred embodiment, two poles of the input of the converter are permanently connected respectively with the central point of two branches of the three-phase rectifier, and the electrical connection means are a relay with two single pole double throw switches.

In an alternative embodiment, two poles of the input of the converter are permanently connected respectively with the central point of two branches of the three-phase rectifier, and the electrical connection means are connected with the central point of the third branch of the rectifier and with the central point between the two electronic switching devices.

In another preferred embodiment, the connection means is a switch with four or more single pole double throw switches switching at the same time.

The converter further comprises either a sea single-phase or three-phase line-type detector connected at the input of the converter such that the detector is operatively associated with the connection means in order to make them change position depending on the type of line connected at the input of the converter.

The one-way conduction devices are diodes, wherein a first diode has the cathode connected to the positive pole of the output of the converter, and a second diode has the anode connected with the negative pole of the output of the converter, and the cathode connected to the anode of the first diode.

Another aspect of the invention relates to a power supply that can be indistinctly connected to a single-phase or three-phase line, comprising a converter such as the one defined above.

Another aspect of the invention relates to a battery recharging equipment that can be indistinctly connected to a single-phase or three-phase line, comprising a converter such as the one defined above.

### Brief Description of Figures

Figure 1 shows respective electrical diagrams of a preferred embodiment of the converter of the invention, wherein Figures 1A and 1B correspond with the two positions of the single pole double throw switches for operating in three-phase mode (Figure 1A) and single-phase mode (Figure 1B).
Figure 2 shows respective electrical diagrams of another preferred embodiment of the converter of the invention, wherein Figures 2A and 2B correspond with the two positions of the single pole double throw switches for operating in three-phase mode (Figure 2A) and single-phase (Figure 2B).
Figure 3 shows two electrical diagrams corresponding to the connection of the converter for operating in three-phase mode (Figure 3 A) and single-phase mode (Figure 3B), and wherein the connection single pole double throw switches have been omitted for greater clarity of the figure.
Figure 4 shows an electrical diagram of the converter including an EMI filter and a line-type detector.
Figure 5 shows several electrical diagrams the operation in "totem-pole" mode of each branch of the rectifier, in a manner already known in the state of the art. The arrows indicate the flow of current.
Figure 6 shows another preferred embodiment of the converter, including means for detecting the type of line to which it is connected, and an auxiliary converter at the output of the rectifier. Two EMI filters (10) have been depicted to show the two connection possibilities, although in a practical implementation only one is used.
Figure 7 shows several preferred alternatives according to the invention for implementing the final converter at the output of the rectifier, wherein Figure 7A shows a final full-bridge converter; Figure 7B shows a final LLC-type converter; and Figure 7C shows a three-phase inverter connected at the output of the rectifier and powering a motor (M).

### Description of a Preferred Embodiment of the Invention

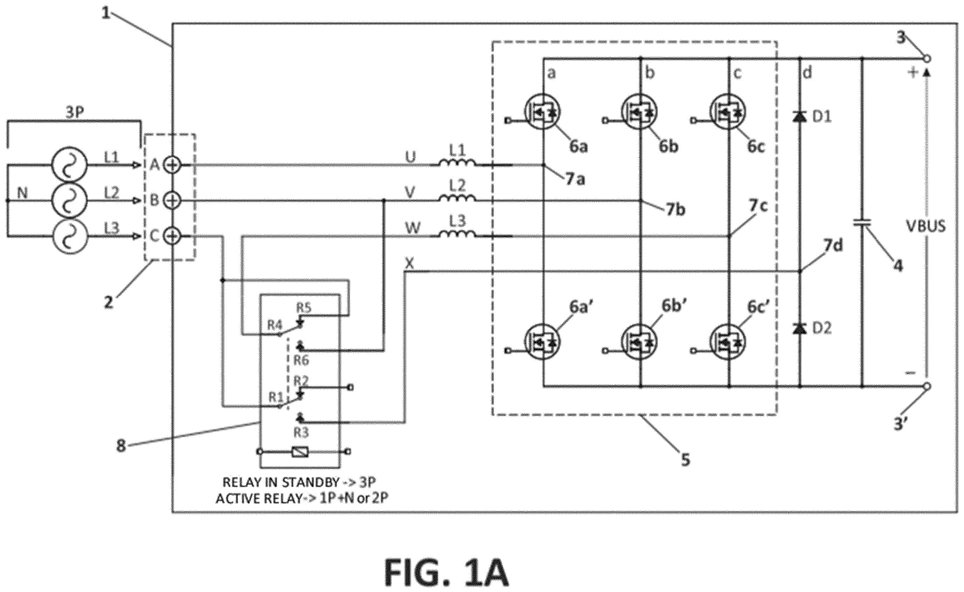

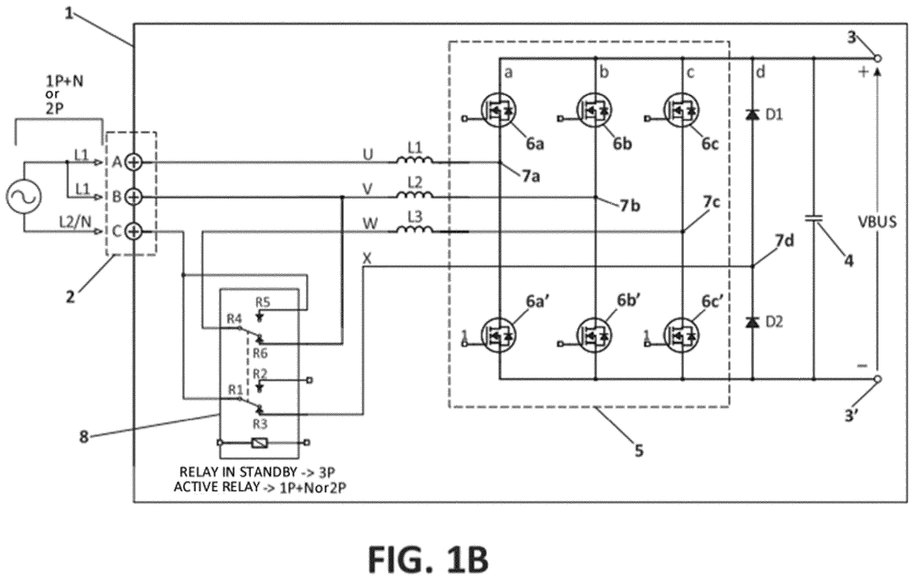

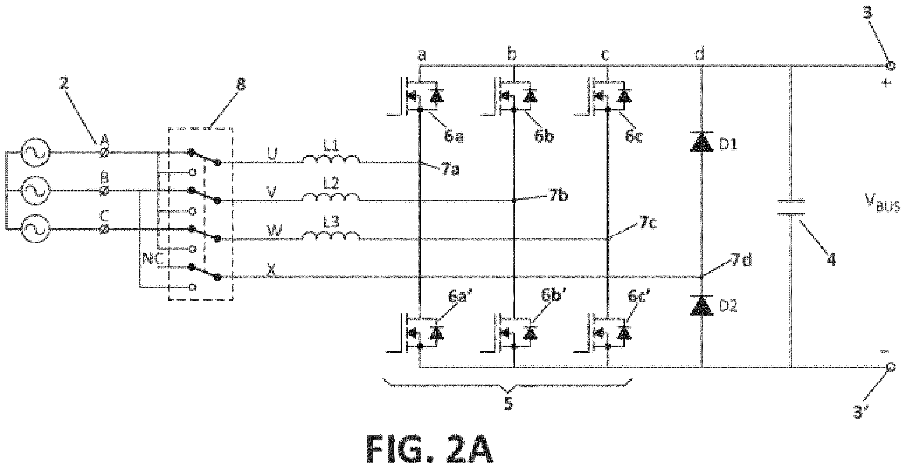

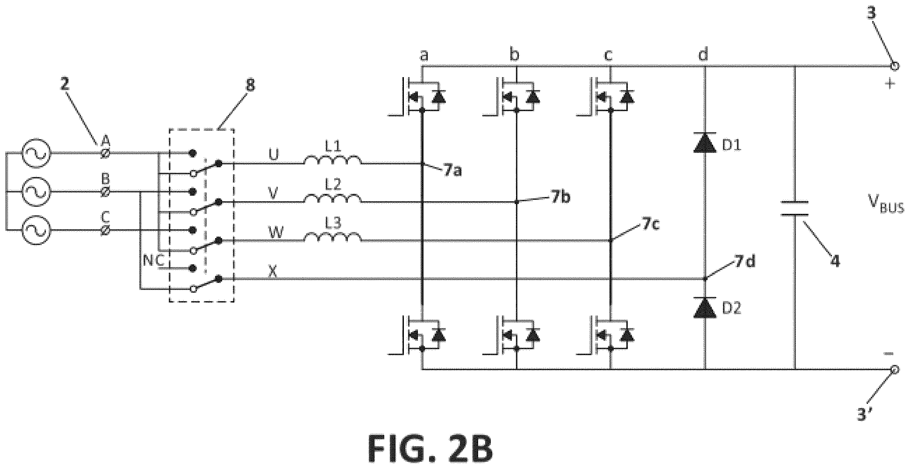

Figures 1 and 2 show a preferred embodiment of a converter (1) according to the invention, which is capable of operating with single-phase lines (one pole plus neutral (1P+N) or two poles (2P)), and with three-phase lines (3P).

For that purpose, the converter (1) comprises an input (2) having three connection poles or lines (A,B,C) that can be connected to a single-phase line (1P+N or 2P) or three-phase line (3P) that is available in the location in which the converter is going to be used, having for that purpose a suitable socket or connector (not depicted). For example, the converter may have two interchangeable connectors, one for a single-phase network and another for a three-phase network, and in each case the corresponding one is connected to the available line type.

The converter (1) has a direct current output (Vbus) with a positive pole and another negative pole (3,3'), and a capacitor (4) connected in parallel with the output for stabilizing the output voltage.

The converter (1) also incorporates a three-phase rectifier (5) for converting alternating current at the input (2) of the converter to direct current at the output (Vbus) of the converter, which has three branches (a,b,c) connected in parallel between the poles (3,3') of the output of the converter, and wherein each branch has two semiconductor switching devices (6a,6a',6b, 6b',6c,6c') connected in series to one another. Preferably, the semiconductor switching devices are MOSFET or IGBT transistors.

The input of the three-phase rectifier (5) are the three central points (7a,7b,7c) of each branch (a,b,c), and the output of the three-phase rectifier (5) are the two common connections between the three branches (a,b,c), which are furthermore connected respectively with the two poles (3,3') of the output of the converter.

Conventionally, the converter (1) comprises a driver (16) for controlling the operation, i.e., switching the semiconductor switching devices of the rectifier between the conduction or cutoff states. The converter (1) is programmed for the rectifier to operate by means of PWM (pulse wide modulation) control. Given that PWM control is widely known to one skilled in the art, it is not considered necessary to further describe this aspect in this specification.

The converter (1) furthermore has a fourth branch (d), also connected in parallel with the three branches (a,b,c) of the rectifier (5) and with the two poles (3,3') of the output of the converter. This branch (d) has two one-way conduction devices (D1,D2), preferably diodes, connected to one another in series and connected in anti-parallel with the direct current output of the converter, and with the three branches of the rectifier. The diodes (D1,D2) are used for the current to return for the "totem-pole" operation of each branch of the converter to rectify a single-phase current.

The connection in anti-parallel is due to the fact that a first diode (D1) has the cathode connected to the positive pole (3) of the output of the converter, and a second diode (D2) has the anode connected with the negative pole (3') of the output of the converter, and the cathode of the second diode (D2) connected with the anode of the first diode (D1).

Conventionally, the converter (1) comprises three coils (L1, L2, L3), each of them connected respectively at the input of each branch of the rectifier, i.e., respectively with the three central points (7a, 7b, 7c) of each branch (a,b,c). In a known manner, these three coils are used for the rectifier to raise the output voltage.

For reconfiguring the connection between the rectifier (5) and the poles (A,B,C) of the input (2) of the converter, depending on whether it has been connected to a single-phase or three-phase line, the converter (1) furthermore incorporates connection means (8) having at least two single pole double throw switches switching at the same time and connecting one or several of the poles (A,B,C) of the input (2) of the converter with the three-phase rectifier (5) and the diodes (D1,D2).

More specifically, the connection element means (8) are configured and connected in the converter for reconfiguring the connection between one or several of the three poles (A,B,C) of the input (2) and the four lines (u,v,w,x) which can be seen in Figures 1 and 2. Lines (u,v,w) are connected with the three central points (7a, 7b, 7c) of the three branches of the converter respectively through coils (L1,L2,L3), and wherein line (x) is connected with the central point (7d) between the two diodes (D1,D2).

In the embodiment of Figures 1A and 1B, the connection means (8) are in the form of a relay having two single pole double throw switches, and the two poles (A,B) of the input (2) are permanently connected with lines (u,v), i.e., with the central points (7a,7b) of the branches (a,b), such that the single pole double throw switches only act on the third input pole (C) and lines (w,x).

The first single pole double throw switch of the relay has a common terminal (R1) that can be connected with two terminals (R2,R3), and the second single pole double throw switch likewise has a common terminal (R4) that can be connected with two terminals (R5,R6). Terminals (R1,R5) are connected with pole (C) of the input, terminal (R4) is connected with line (w), terminal (R6) is connected with line (v), terminal R3 is connected with line (x), and terminal (R2) is not connected.

When a three-phase network (3P) is connected at the input (2) (three-phase mode, Figure 1A), the single pole double throw switches of the relay adopt a first position in which input pole (C) is connected with line (w). In this case, the three poles (A,B,C) of the input (2) are connected respectively with a central point (7a, 7b, 7c) of each of the three branches (a,b,c) of the rectifier (5), such that the latter can rectify a three-phase current at the input of the converter. The current through lines (u,v,w) is the same. Line (x) connected with the central point between the diodes (D1,D2), is not connected (is isolated), since the diodes are not used in three-phase rectification.

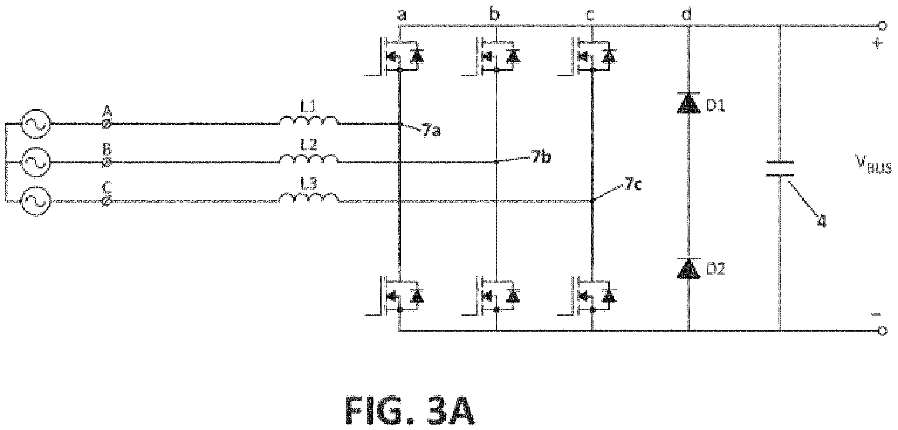

In the three-phase mode, the converter (1) is connected as shown in Figure 3A.

When a single-phase network ((1P+N) or (2P)) is connected at the input (2) (single-phase mode, Figure 1B), the phase (L1) is connected at two input poles, for example with poles (A,B) in Figure 1B, and the neutral (N) (or the other phase (L2)) is connected with pole (C).

The single pole double throw switches of the relay adopt a second position in which a single pole double throw switch of the relay connects lines (v,w) to one another and the other single pole double throw switch connects pole (C) with line (x), i.e., with the central point between the two diodes (D1,D2). Therefore, the three branches of the rectifier (a,b,c) receive the same phase, and the current through these three lines (u,v,w) is the same. Given that each branch (a,b,c) of the rectifier operates in "totem-pole" mode, the current through the return line (x) is three times the current of the upper contact.

In the single-phase mode, modulation of the three single-phase phases must furthermore be done by means of interleaving 120° (at the switching frequency) to reduce the EMI filter of the input.

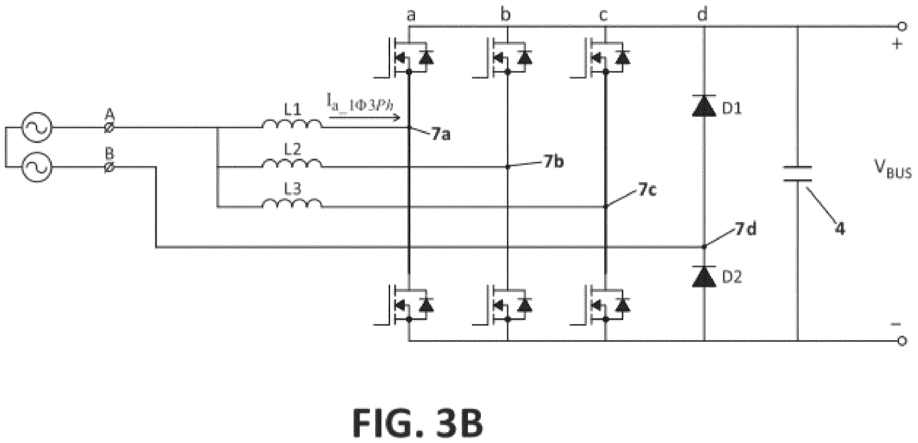

In the single-phase mode, the converter (1) is connected as shown in Figure 3B.

Depending on the availability of relays on the market and their capacity for current, a relay with three single pole double throw switches could alternatively be used and two contacts could be placed in parallel for the lower contact with line (x). This drawback is due to the fact that in single-phase mode the current entering through the three branches of the totem-pole must return through line (x) acting as the neutral (this would also occur with a 4-contact relay), but it is a minor drawback since by always keeping the currents through the three branches of the converter the same, the inductive elements are greatly optimized.

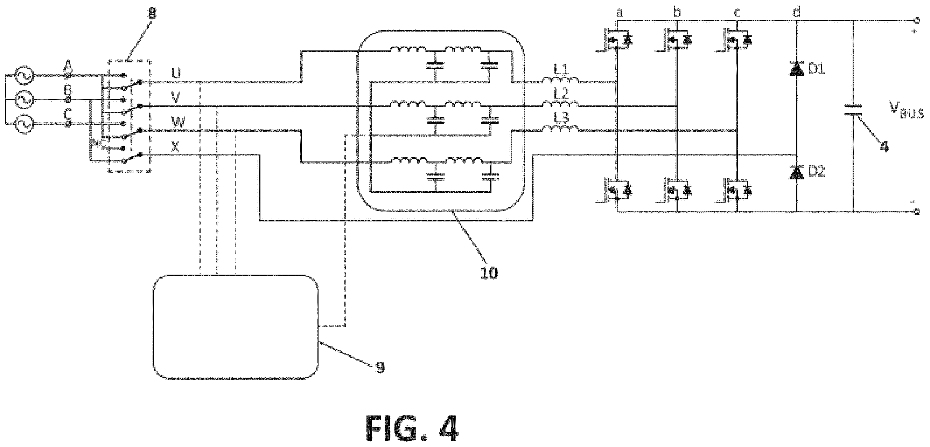

As shown in Figure 4, the reconfiguration of the connection elements (8), i.e., the change between the first and the second and vice versa, of the single pole double throw switches is automatic, for which purpose the converter (1) has either a single-phase or three-phase line-type detector (9) connected with the input of the converter. The detector (9) is furthermore operatively associated with the connection means (8), for example with the control terminals of the relay, to make the single pole double throw switches change position depending on the type of line connected at the input of the converter.

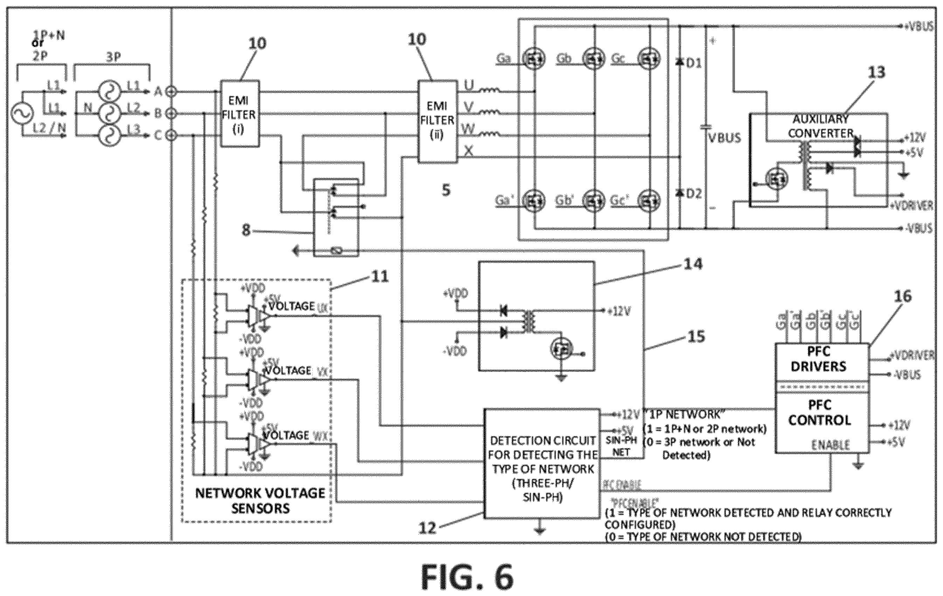

Figure 6 shows in greater detail a preferred way of implementing the line-type detector (9), and it comprises a group of network voltage sensors (11) including one amplifier for each input line A,B,C, as well as a line-type detector circuit (12) which receives the three outputs of the amplifiers and determines if it is a single-phase or three-phase line depending on the voltage measurements of each input line. The output (15) of the detector (12) is connected with the control device of the relay of the connection means (8).

In a manner known in the state of the art, the converter (1) furthermore has an EMI filter (10) for reducing noise in the rectification process, with the EMI filter being connected at the input of the three-phase rectifier (5), and before the coils (L1,L2,L3). Alternatively, the EMI filter (10) is connected between the input (2) and the connection means (8). These two connection options for the EMI filter (10) are shown in Figure 6.

The converter (1) of Figure 6 also includes: a very low power microconverter (14) for powering the voltage sensors (11), and a low power auxiliary converter (13) powering the microconverter (14) and the control circuit (16) and measurement circuit (12) of the power supply, and it is connected at the output of the three-phase rectifier (5).

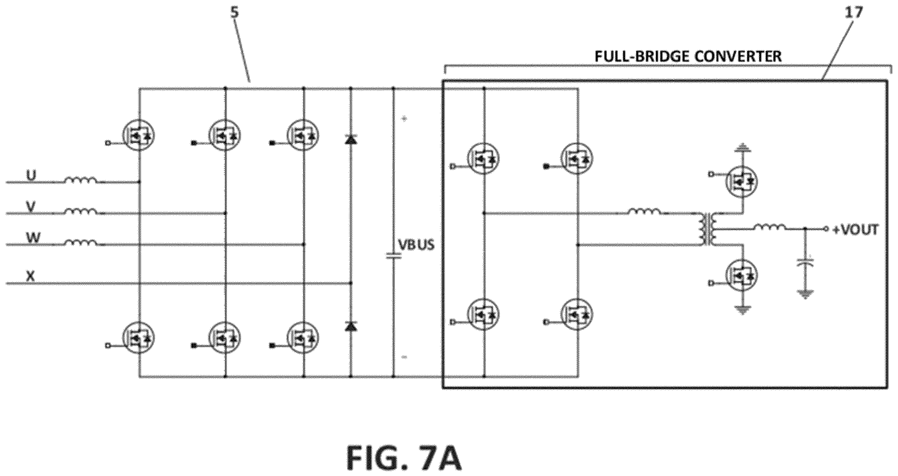

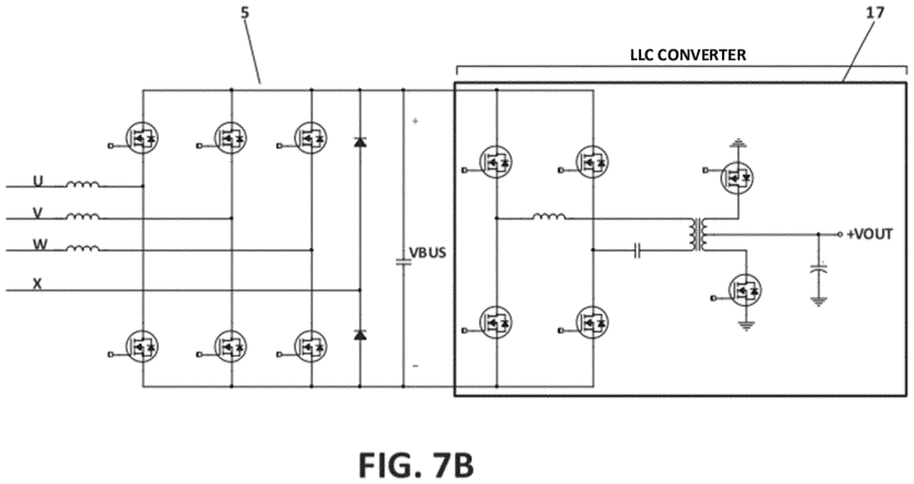

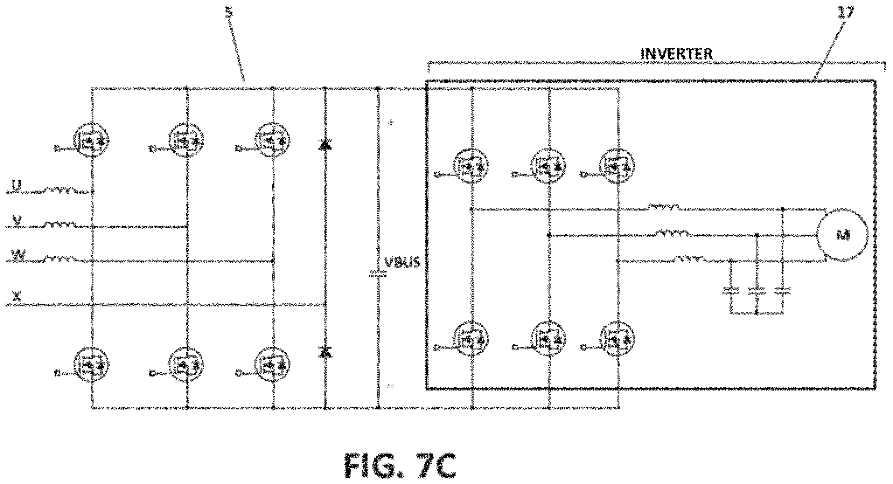

The embodiment of Figure 7 presents a final converter (17) at the output of the rectifier (5). The final converter (17) is a switched converter using a transformer to galvanically isolate the primary (power grid and output of the PFC) from the secondary (final load). This final converter (17) may have a Forward, Full-Bridge (Figure 7a) or LLC (Figure 7B) topology. Additionally, the final converter (17) may control a motor (M) (Figure 7C), for example with a three-phase inverter, in which case galvanic isolation would not be used

The process of starting up the converter (1) and the detector (9) of the type of network to which the converter is connected is explained below:
Upon connecting the converter (1) to an alternating current network, all the transistors of the PFC rectifier (5) are off and the relay (8) is in the standby position (configured by default for the three-phase network). Since MOSFETs or IGBTs have a diode in anti-parallel, the three branches (a,b,c) of the totem-pole work like a full-wave rectifier, so the network voltage will always reach the output capacitor (4) of the PFC (5) (without correcting the power factor). The output capacitor (4) is loaded with the peak network voltage. The output bus (Vbus) powers the auxiliary converter (13) which is in charge of powering the controller (16) of the transistors by means of the line (VDRIVER) and supplying the power needed to start the process of detecting the type of network.
- If the network is three-phase (Figure 1A) each of the three phases will be at in the points u, v, and w. The transistors act as a three-phase full-wave rectifier. The voltage at (Vbus) will be the line voltage times the square root of two. The auxiliary converter (13) starts up with that voltage and generates +12V and +5V for the controller (16), sensors (11), and network detector (12).

In the primary there are three isolated voltage sensors (11) for measuring the voltage of each phase (A,B,C) at a virtual neutral point. These sensors (11) are necessary for the converter (for example ACPL-C870 by AVAGO) to perform power factor correction. As a result of these voltage sensors (11), voltage U-X, V-X, and W-X reach the detection circuit (12). With those measurements, the detector (12) verifies that the voltages maintain an approximate phase shift of 120°; if that condition is met the system is configured as three-phase and the relay (8) is left in the standby position. At this time, the controller (16) of the power factor corrector can begin to control the transistors of the rectifier (5) to raise the output voltage and maintain a power factor close to 1.
- If the network is single-phase (Figure 1B), the line is at points at u and v. The neutral of the network will be connected to point w. The transistors act as a single phase full-wave rectifier. The voltage at (Vbus) will be the phase-neutral voltage times the square root of two. The auxiliary converter (13) starts up with that voltage and generates +12V and +5V for the controller (16). The isolated voltage sensors (11) supply to the detector (12) voltages U-X, V-X and W-X. With those measurements, the detector (12) verifies if the voltages maintain an approximate phase shift of 120°; since it is a single-phase network this condition will not be met given that voltage U-X is the same as voltage V-X, and voltage W-X will be phase shifted by 180° with respect to the two aforementioned voltages. Therefore, since the conditions of the three-phase network are not met, the detector (12) must verify that voltage U-X is the same as V-X and that W-X is phase shifted by 180° to verify that the single-phase connection is correct. If the condition is met, it will activate the relay (8) for connecting W to the line and X to the neutral of the network. As soon as the relay has been activated, the power factor corrector controller (16) controls the transistors of the rectifier (5) in the single-phase mode, raising the output voltage and maintaining the power factor close to 1.

If the conditions are not met for selecting the single-phase mode or the three-phase mode, the power factor corrector controller (16) does not start up and it will have to indicate that there is a connection error.

Figure 5 explains the "totem-pole" operation mode of the first branch (a) of the rectifier (5) in a manner known in the state of the art, so it is not considered necessary to further explain it. The "totem-pole" operation of the other branches (b,c) is identical to that of branch (a).

Figures 5A and 5B show the flow of current during the positive half cycle of the input alternating current, and Figures 5C and 5D show the flow of current during the negative half cycle of the input alternating current. In Figures 5B and 5C the top switch or transistor (6a) is in conduction mode and the bottom switch or transistor (6a') is in cutoff mode. In Figures 5A and 5D the bottom switch or transistor (6a') is in conduction mode and the top switch or transistor (6a) is in cutoff mode.

Therefore, in Figure 5A the current flows through the coil (L1) (charging the coil), through the bottom transistor (6a') and returns to the alternating current source through the bottom diode (D2). The bottom transistor (6a') is then switched off and the top transistor (6a) is switched on, such that the coil (L1) is discharged through the top transistor (6a), through the load (R) connected at the output, and through the bottom diode (D2).

In the half cycle negative as shown in Figure 5C, the current flows through the top diode (D1), through the top transistor (6a), and through the coil (L1) (charging the coil), and in Figure 5D the coil (L1) is discharged through the top diode (D1), through the load (R) connected at the output, and through the bottom transistor (6a').

## Claims

1. A converter (1) with power factor correction capable of operating with single-phase and three-phase lines, the converter (1) comprising:
a three-pole (A,B,C) input (2) that can be connected to a single-phase (1P+N,2P) or three-phase (3P) current source, and a direct current output (Vbus) with a positive pole and a negative pole (3,3'),
a three-phase rectifier (5) for converting an alternating current at the input (2) of the converter (1) into direct current at the direct current output (Vbus) of the converter (1), wherein the three-phase rectifier (5) comprises three branches (a,b,c) connected in parallel between the poles (3,3') of the current output (Vbus) of the converter (1), and wherein each branch (a,b,c) has two semiconductor switching devices (6a,6a',6b,6b',6c,6c') connected in series to one another,
three coils (L1,L2,L3) and three lines (u,v,w) connected respectively with central points (7a,7b,7c) of the three branches (a,b,c) of the converter (1), between the two semiconductor switching devices (6a,6a',6b,6b',6c,6c') by means of the three coils (L1,L2,L3),
a fourth branch (d) having two one-way conduction devices (D1,D2) connected to one another in series and connected in anti-parallel with the direct current output (Vbus) of the converter (1), and in parallel with the three branches (a,b,c) of the rectifier (5),
**characterized in that**, the converter (1) further comprises:
electrical connection means (8) configured and connected in the converter (1) for reconfiguring the connection between the one or several of the three poles (A,B,C) of the input (2) of the converter (1) with the three-phase rectifier (5) by means of the three lines (u,v,w), and with the one-way conduction devices (D1,D2) by means of a fourth line (x) connected to a central point (7d) between the two one-way conduction devices (D1,D2), depending on the type of alternating current line either three-pole or single-pole line connected to the input (2) of the converter (1),
and wherein the electrical connection means (8) are connected such that in a first position of the electric connection means (8) when the converter (1) is connected to a three-phase source (3P), each of the three input poles (A,B,C) is connected with the central point (7a,7b,7c) of each of the three branches (a,b,c) of the rectifier (5) respectively by means of the three lines (u,v,w) and the three coils (L1,L2,L3), and the fourth line (x) connected to the central point (7d) between the two one-way conduction devices (D1,D2) is isolated from the input (2) of the converter (1), such that the rectifier (5) can rectify a three-phase current at the input (2) of the converter (1),
and in a second position of the electric connection means (8) when the converter (1) is connected to a single-pole current source (1P+N, 2P), one or two of the input poles (A,B) of the input (2) is connected with each central point (7a,7b,7c) of the three branches (a,b,c) of the rectifier (5), and a third pole (C ) is connected by means of the fourth line (x) with the central point (7d) between the elements of one-way conduction devices (D1,D2), such that the rectifier (5) can rectify a single-phase current at the input (2) of the converter (1).

2. The converter (1) with power factor correction capable of operating with single-phase and three-phase lines according to claim 1, **characterized in that** it further comprises either a single-phase or three-phase line-type detector (9) connected with the input (2) of the converter (1), and **in that** the line-type detector (9) is operatively associated with the electric connection means (8) in order to make them change position depending on the type of line connected at the input (2) of the converter (1).

3. The converter (1) with power factor correction capable of operating with single-phase and three-phase lines according to claim 1 or 2, **characterized in that** it further comprises a controller (16) for controlling the operation of the semiconductor switching devices (6a,6a',6b,6b',6c,6c') of the rectifier (5), and **in that** the converter (1) is adapted for the rectifier (5) to operate by means of PWM control.

4. The converter (1) with power factor correction capable of operating with single-phase and three-phase lines according to any of the preceding claims, **characterized in that** the one-way conduction devices (D1,D2) are diodes, and wherein a first diode (D1) has the cathode connected with the positive pole (3) of the current output (Vbus) of the converter (1), and a second diode (D2) has the anode connected with the negative pole (3') of the current output (Vbus) of the converter (1) and the cathode connected to the anode of the first diode (D1).

5. The converter (1) with power factor correction capable of operating with single-phase and three-phase lines according to any of the preceding claims, **characterized in that** the electrical connection means (8) comprise two or more switches that can be simultaneously switched.

6. The converter (1) with power factor correction capable of operating with single-phase and three-phase lines according to any of claim 5, **characterized in that** the electric connection means (8) are a relay incorporating said switches.

7. The converter (1) with power factor correction capable of operating with single-phase and three-phase lines according to any of claim 6, **characterized in that** two poles (A,B) of the input (2) are permanently connected with first and second lines (u,v) and central points (7a,7b) of the branches (a,b) of the rectifier (5), such that the single pole double throw switches only act on the third input pole (C ) and third and fourth lines (w,x).

8. The converter (1) with power factor correction capable of operating with single-phase and three-phase lines according to claim 5 or 6, **characterized in that** the switches are single-pole double-throw switches.

9. The converter (1) with power factor correction capable of operating with single-phase and three-phase lines according to any of the preceding claims, **characterized in that** it further comprises an EMI filter (10) at the input of the three-phase rectifier (5), either between the input and the electric connection means (8) or between the electric connection means (8) and the input of the three-phase rectifier (5).

10. The converter (1) with power factor correction capable of operating with single-phase and three-phase lines according to any of the preceding claims, **characterized in that** the semiconductor switching devices (6a,6a',6b,6b',6c,6c') are MOSFET or IGBT transistors.

11. The converter (1) with power factor correction capable of operating with single-phase and three-phase lines according to any of the preceding claims, **characterized in that** it comprises an auxiliary converter (13) and a final converter (17) connected at the output of the three-phase rectifier (5), and wherein the auxiliary converter (13) is adapted for providing a DC voltage to power the driver of the semiconductor switching devices (6a,6a',6b,6b',6c,6c').

12. The converter (1) with power factor correction capable of operating with single-phase and three-phase lines according to claim 10, **characterized in that** the final converter (17) is adapted for powering direct current loads with isolation or alternating current loads without isolation.

13. The converter (1) with power factor correction capable of operating with single-phase and three-phase lines according to any of the preceding claims, **characterized in that** it is configured such that when the converter (1) is connected to an indistinctly three-phase or single-phase alternating current source, the value of the current for each of the three input lines (u,v,w) to the converter (5) is substantially the same.

14. A power supply that can be indistinctly connected to a single-phase or three-phase line, **characterized in that** it comprises a converter such as that defined in any of claims 1 to 13.

15. Battery recharging equipment that can be indistinctly connected to a single-phase or three-phase line, **characterized in that** it comprises a converter such as that defined in any of claims 1 to 13.

## Patentansprüche

1. Wandler (1) mit Leistungsfaktorkorrektur, welcher in der Lage ist mit Einphasen- und Dreiphasenleitungen betrieben zu werden, wobei der Wandler (1) Folgendes umfasst:
einen Eingang (2) mit drei Polen (A, B, C), welcher mit einer einphasigen (1P+N, 2P) oder dreiphasigen (3P) Stromquelle verbunden werden kann, und einen direkten Stromausgang (Vbus) mit einem positiven Pol und einem negativen Pol (3, 3'),
einen dreiphasigen Gleichrichter (5) zum Wandeln eines Wechselstroms am Eingang (2) des Wandlers (1) in einen Gleichstrom am direkten Stromausgang (Vbus) des Wandlers (1), wobei der dreiphasige Gleichrichter (5) drei Zweige (a, b, c) umfasst, welche parallel zwischen den Polen (3, 3') des Stromausgangs (Vbus) des Wandlers (1) verbunden sind, und wobei jeder Zweig (a, b, c) zwei halbleitende Schaltvorrichtungen (6a, 6a', 6b, 6b', 6c, 6c') aufweist, welche miteinander in Reihe verbunden sind,
drei Spulen (L1, L2, L3) und drei Leitungen (u, v, w), welche jeweils mit Mittelpunkten (7a, 7b, 7c) der drei Zweige (a, b, c) des Wandlers (1), zwischen den beiden halbleitenden Schaltvorrichtungen (6a, 6a', 6b, 6b', 6c, 6c') mittels der drei Spulen (L1, L2, L3), verbunden sind,
einen vierten Zweig (d) aufweisend zwei Einweg-Leitvorrichtungen (D1, D2), welche miteinander in Reihe und antiparallel mit dem direkten Stromausgang (Vbus) des Wandlers (1) verbunden sind, und parallel mit den drei Zweigen (a, b, c) des Gleichrichters (5) verbunden sind,
**dadurch gekennzeichnet, dass** der Wandler (1) zusätzlich Folgendes umfasst:
elektrische Verbindungsmittel (8), welche dazu ausgebildet und im Wandler (1) verbunden sind, um die Verbindung zwischen dem einen oder den mehreren der drei Pole (A, B, C) des Eingangs (2) des Wandlers (1) mit dem dreiphasigen Gleichrichter (5) mittels der drei Leitungen (u, v, w), und mit den Einweg-Leitvorrichtungen (D1, D2) mittels einer vierten Leitung (x), welche mit einem Mittelpunkt (7d) zwischen den beiden Einweg-Leitvorrichtungen (D1, D2) verbunden ist, in Abhängigkeit davon, ob der Typ der Wechselstromleitung entweder eine mit dem Eingang (2) des Wandlers (1) verbundenen dreipolige oder einpolige Leitung ist, zu rekonfigurieren,
und wobei die elektrischen Verbindungsmittel (8) derart verbunden sind, dass in einer ersten Stellung der elektrischen Verbindungsmittel (8), wenn der Wandler (1) mit einer dreiphasigen Quelle (3P) verbunden ist, jeder der drei Eingangspole (A, B, C) mit dem Mittelpunkt (7a, 7b, 7c) jeder der drei Zweige (a, b, c) des Gleichrichters (5) jeweils mittels der drei Leitungen (u, v, w) und der drei Spulen (L1, L2, L3) verbunden ist, und die vierte Leitung (x), welche mit dem Mittelpunkt (7d) zwischen den beiden Einweg-Leitvorrichtungen (D1, D2) verbunden ist, vom Eingang (2) des Wandlers (1) isoliert ist, sodass der Gleichrichter (5) einen dreiphasigen Strom am Eingang (2) des Wandlers (1) gleichrichten kann,
und in einer zweiten Stellung der elektrischen Verbindungsmittel (8), wenn der Wandler (1) mit einer einpoligen Stromquelle (1P+N, 2P) verbunden ist, einer oder zwei der Eingangspole (A, B) des Eingangs (2) mit jedem Mittelpunkt (7a, 7b, 7c) der drei Zweige (a, b, c) des Gleichrichters (5) verbunden ist, und ein dritter Pol (C) mittels der vierten Leitung (x) mit dem Mittelpunkt (7d) zwischen den Elementen der Einweg-Leitvorrichtungen (D1, D2) verbunden ist, sodass der Gleichrichter (5) einen einphasigen Strom am Eingang (2) des Wandlers (1) gleichrichten kann.

2. Wandler (1) mit Leistungsfaktorkorrektur, welcher in der Lage ist mit Einphasen- und Dreiphasenleitungen betrieben zu werden nach Anspruch 1, **dadurch gekennzeichnet, dass** er zusätzlich entweder einen einphasigen oder dreiphasigen leitungsartigen Detektor (9), welcher mit dem Eingang (2) des Wandlers (1) verbunden ist, umfasst, und dass der leitungsartige Detektor (9) betriebsfähig mit den elektrischen Verbindungsmitteln (8) assoziiert ist, um sie dazu zu bringen, deren Stellung zu ändern, in Abhängigkeit des Typs der am Eingang (2) des Wandlers (1) verbundenen Leitung.

3. Wandler (1) mit Leistungsfaktorkorrektur, welcher in der Lage ist mit Einphasen- und Dreiphasenleitungen betrieben zu werden nach Anspruch 1 oder 2, **dadurch gekennzeichnet, dass** er zusätzlich eine Steuerung (16) zum Steuern des Betriebs der halbleitenden Schaltvorrichtungen (6a, 6a', 6b, 6b', 6c, 6c') des Gleichrichters (5) umfasst, und dass der Wandler (1) dazu angepasst ist, dass der Gleichrichter (5) mittels PWM-Steuerung betrieben wird.

4. Wandler (1) mit Leistungsfaktorkorrektur, welcher in der Lage ist mit Einphasen- und Dreiphasenleitungen betrieben zu werden nach einem der vorhergehenden Ansprüche, **dadurch gekennzeichnet, dass** die Einweg-Leitvorrichtungen (D1, D2) Dioden sind, und wobei eine erste Diode (D1) die Kathode mit dem positiven Pol (3) des Stromausgangs (Vbus) des Wandlers (1) verbunden aufweist, und eine zweite Diode (D2) die Anode mit dem negativen Pol (3') des Stromausgangs (Vbus) des Wandlers (1) verbunden und die Kathode mit der Anode der ersten Diode (D1) verbunden aufweist.

5. Wandler (1) mit Leistungsfaktorkorrektur, welcher in der Lage ist mit Einphasen- und Dreiphasenleitungen betrieben zu werden nach einem der vorhergehenden Ansprüche, **dadurch gekennzeichnet, dass** die elektrischen Verbindungsmittel (8) zwei oder mehr Schalter umfassen, welche gleichzeitig geschaltet werden können.

6. Wandler (1) mit Leistungsfaktorkorrektur, welcher in der Lage ist mit Einphasen- und Dreiphasenleitungen betrieben zu werden nach einem der Ansprüche 5, **dadurch gekennzeichnet, dass** die elektrischen Verbindungsmittel (8) ein Relais sind, welches die genannten Schalter einschließt.

7. Wandler (1) mit Leistungsfaktorkorrektur, welcher in der Lage ist mit Einphasen- und Dreiphasenleitungen betrieben zu werden nach einem der Ansprüche 6, **dadurch gekennzeichnet, dass** zwei Pole (A, B) des Eingangs (2) permanent mit ersten und zweiten Leitungen (u, v) und Mittelpunkten (7a, 7b) der Zweige (a, b) des Gleichrichters (5) verbunden sind, sodass die einpoligen Umschalter nur auf den dritten Eingangspol (C) und die dritte und die vierte Leitung (w, x) wirken.

8. Wandler (1) mit Leistungsfaktorkorrektur, welcher in der Lage ist mit Einphasen- und Dreiphasenleitungen betrieben zu werden nach Anspruch 5 oder 6, **dadurch gekennzeichnet, dass** die Schalter einpolige Umschalter sind.

9. Wandler (1) mit Leistungsfaktorkorrektur, welcher in der Lage ist mit Einphasen- und Dreiphasenleitungen betrieben zu werden nach einem der vorhergehenden Ansprüche, **dadurch gekennzeichnet, dass** er zusätzlich einen Funkenstörfilter (10) am Eingang des dreiphasigen Gleichrichters (5), entweder zwischen dem Eingang und den elektrischen Verbindungsmitteln (8) oder zwischen den elektrischen Verbindungsmitteln (8) und dem Eingang des dreiphasigen Gleichrichters (5), umfasst.

10. Wandler (1) mit Leistungsfaktorkorrektur, welcher in der Lage ist mit Einphasen- und Dreiphasenleitungen betrieben zu werden nach einem der vorhergehenden Ansprüche, **dadurch gekennzeichnet, dass** die halbleitenden Schaltvorrichtungen (6a, 6a', 6b, 6b', 6c, 6c') MOSFET- oder IGBT-Transistoren sind.

11. Wandler (1) mit Leistungsfaktorkorrektur, welcher in der Lage ist mit Einphasen- und Dreiphasenleitungen betrieben zu werden nach einem der vorhergehenden Ansprüche, **dadurch gekennzeichnet, dass** er einen Hilfswandler (13) und einen Endwandler (17), welcher am Ausgang des dreiphasigen Gleichrichters (5) verbunden ist, umfasst, und wobei der Hilfswandler (13) dazu angepasst ist, eine Gleichspannung bereitzustellen, um den Treiber der halbleitenden Schaltvorrichtungen (6a, 6a', 6b, 6b', 6c, 6c') mit Energie zu versorgen.

12. Wandler (1) mit Leistungsfaktorkorrektur, welcher in der Lage ist mit Einphasen- und Dreiphasenleitungen betrieben zu werden nach Anspruch 10, **dadurch gekennzeichnet, dass** der Endwandler (17) dazu angepasst ist, Gleichstrombelastungen mit Isolierung oder Wechselstrombelastungen ohne Isolierung zu versorgen.

13. Wandler (1) mit Leistungsfaktorkorrektur, welcher in der Lage ist mit Einphasen- und Dreiphasenleitungen betrieben zu werden nach einem der vorhergehenden Ansprüche, **dadurch gekennzeichnet, dass** er derart ausgebildet ist, dass, wenn der Wandler (1) mit einer unterschiedslos dreiphasigen oder einphasigen Wechselstromquelle verbunden ist, der Wert des Stroms für jede der drei Eingangsleitungen (u, v, w) zum Wandler (5) im Wesentlichen gleich ist.

14. Leistungsversorgung, welche unterschiedslos mit einer einphasigen oder dreiphasigen Leitung verbunden werden kann, **dadurch gekennzeichnet, dass** sie einen Wandler nach einem der Ansprüche 1 bis 13 umfasst.

15. Batterieaufladegerät, welches unterschiedslos mit einer einphasigen oder dreiphasigen Leitung verbunden werden kann, **dadurch gekennzeichnet, dass** es einen Wandler nach einem der Ansprüche 1 bis 13 umfasst.

## Revendications

1. Convertisseur (1) avec correction de facteur de puissance capable de fonctionner avec des lignes monophasées et triphasées, le convertisseur (1) comprenant :
une entrée à trois pôles (A, B, C) (2) qui peut être connectée à une source de puissance monophasée (1P+N, 2P) ou triphasée (3P), et une sortie de courant continue (Vbus) avec un pôle positif et un pôle négatif (3, 3'),
un redresseur triphasé (5) pour convertir un courant alternatif dans l'entrée (2) du convertisseur (1) en courant continu dans la sortie de courant continu (Vbus) du convertisseur (1), dans lequel le redresseur triphasé (5) comprend trois branches (a, b, c) connectées en parallèle entre les pôles (3, 3') de la sortie de courant (Vbus) du convertisseur (1), et dans lequel chaque branche (a, b, c) a deux dispositifs de commutation à semi-conducteur (6a, 6a', 6b, 6b', 6c, 6c') connectés en série entre eux,
trois bobines (L1, L2, L3) et trois lignes (u, v, w) connectées respectivement avec des points centraux (7a, 7b, 7c) des trois branches (a, b, c) du convertisseur (1), entre les deux dispositifs de commutation à semi-conducteur (6a, 6a', 6b, 6b', 6c, 6c') au moyen des trois bobines (L1, L2, L3),
une quatrième branche (d) qui a deux dispositifs à conduction unidirectionnelle (D1, D2) connectés entre eux en série et connectés en antiparallèle avec la sortie de courant continu (Vbus) du convertisseur (1), et en parallèle avec les trois branches (a, b, c) du redresseur (5),
**caractérisé en ce que** le convertisseur (1) comprend en outre :
des moyens de connexion électrique (8) configurés et connectés dans le convertisseur (1) pour reconfigurer la connexion entre l'un ou plusieurs des trois pôles (A, B, C) de l'entrée (2) du convertisseur (1) avec le redresseur triphasé (5) au moyen des trois lignes (u, v, w), et avec les dispositifs à conduction unidirectionnelle (D1, D2) au moyen d'une quatrième ligne (x) connectée à un point central (7d) entre les deux dispositifs de conduction unidirectionnelle (D1, D2), selon le type de ligne de courant alternatif, ligne ou bien à trois pôles ou bien à un unique pôle, connectée dans l'entrée (2) du convertisseur (1),
et dans lequel les moyens de connexion électrique (8) sont connectés de telle manière que, dans une première position des moyens de connexion électrique (8) lorsque le convertisseur (1) est connecté à une source triphasée (3P), chacun des trois pôles d'entrée (A, B, C) est connecté avec le point central (7a, 7b, 7c) de chacune des trois branches (a, b, c) du redresseur (5), respectivement au moyen des trois lignes (u, v, w) et des trois bobines (L1, L2, L3), et la quatrième ligne (x) connectée au point central (7d) entre les deux dispositifs à conduction unidirectionnelle (D1, D2) est isolée de l'entrée (2) du convertisseur (1), de telle manière que le redresseur (5) peut redresser un courant triphasé dans l'entrée (2) du convertisseur (1),
et dans une deuxième position des moyens de connexion électrique (8) lorsque le convertisseur (1) est connecté à une source de courant à un unique pôle (1P+N, 2P), un ou deux des pôles d'entrée (A, B) de l'entrée (2) sont connectés avec chaque point central (7a, 7b, 7c) des trois branches (a, b, c) du redresseur (5), et un troisième pôle (C) est connecté au moyen de la quatrième ligne (x) avec le point central (7d) entre les éléments de dispositifs à conduction unidirectionnelle (D1, D2), de telle manière que le redresseur (5) peut redresser un courant monophasé dans l'entrée (2) du convertisseur (1).

2. Convertisseur (1) avec correction de facteur de puissance capable de fonctionner avec des lignes monophasées et triphasées selon la revendication 1, **caractérisé en ce qu'**il comprend en outre un détecteur de type de ligne soit monophasée soit triphasée (9) connecté avec l'entrée (2) du convertisseur (1), et **en ce que** le détecteur de type de ligne (9) est associé de manière opérationnelle avec les moyens de connexion électrique (8) afin de les faire changer de position selon le type de ligne connectée dans l'entrée (2) du convertisseur (1).

3. Convertisseur (1) avec correction de facteur de puissance capable de fonctionner avec des lignes monophasées et triphasées selon la revendication 1 ou 2, **caractérisé en ce qu'**il comprend en outre un contrôleur (16) pour contrôler le fonctionnement des dispositifs de commutation à semi-conducteur (6a, 6a', 6b, 6b', 6c, 6c') du redresseur (5), et **en ce que** le convertisseur (1) est adapté pour que le redresseur (5) fonctionne au moyen de contrôle PWM

4. Convertisseur (1) avec correction de facteur de puissance capable de fonctionner avec des lignes monophasées et triphasées selon l'une quelconque des revendications précédentes, **caractérisé en ce que** les dispositifs à conduction unidirectionnelle (D1, D2) sont des diodes, et dans lequel une première diode (D1) a la cathode connectée avec le pôle positif (3) de la sortie de courant (Vbus) du convertisseur (1), et une deuxième diode (D2) a l'anode connectée avec le pôle négatif (3') de la sortie de courant (Vbus) du convertisseur (1) et la cathode connectée avec l'anode de la première diode (D1).

5. Convertisseur (1) avec correction de facteur de puissance capable de fonctionner avec des lignes monophasées et triphasées selon l'une quelconque des revendications précédentes, **caractérisé en ce que** les moyens de connexion électrique (8) comprennent deux ou plusieurs commutateurs qui peuvent être commutés simultanément.

6. Convertisseur (1) avec correction de facteur de puissance capable de fonctionner avec des lignes monophasées et triphasées selon l'une quelconque de la revendication 5, **caractérisé en ce que** les moyens de connexion électrique (8) sont un relais qui incorpore lesdits commutateurs.

7. Convertisseur (1) avec correction de facteur de puissance capable de fonctionner avec des lignes monophasées et triphasées selon l'une quelconque de la revendication 6, **caractérisé en ce que** deux pôles (A, B) de l'entrée (2) sont connectés en permanence avec la première et deuxième lignes (u, v) et des points centraux (7a, 7b) des branches (a, b) du redresseur (5), de telle manière que les commutateurs à double voie à un seul pôle agissent seulement sur le troisième pôle d'entrée (C) et la troisième et quatrième lignes (w, x).

8. Convertisseur (1) avec correction de facteur de puissance capable de fonctionner avec des lignes monophasées et triphasées selon la revendication 5 ou 6, **caractérisé en ce que** les commutateurs sont des commutateurs à double voie à un seul pôle.

9. Convertisseur (1) avec correction de facteur de puissance capable de fonctionner avec des lignes monophasées et triphasées selon l'une quelconque des revendications précédentes, **caractérisé en ce qu'**il comprend en outre un filtre EMI (10) dans l'entrée du redresseur triphasé (5), ou bien entre l'entrée et les moyens de connexion électrique (8), ou bien entre les moyens de connexion électrique (8) et l'entrée du redresseur triphasé (5).

10. Convertisseur (1) avec correction de facteur de puissance capable de fonctionner avec des lignes monophasées et triphasées selon l'une quelconque des revendications précédentes, **caractérisé en ce que** les dispositifs de commutation à semi-conducteur (6a, 6a', 6b, 6b', 6c, 6c') sont des transistors MOSFET ou IGBT.

11. Convertisseur (1) avec correction de facteur de puissance capable de fonctionner avec des lignes monophasées et triphasées selon l'une quelconque des revendications précédentes, **caractérisé en ce qu'**il comprend un convertisseur auxiliaire (13) et un convertisseur final (17) connectés à la sortie du redresseur triphasé (5), et dans lequel le convertisseur auxiliaire (13) est adapté pour fournir une tension de CC pour alimenter avec de la puissance le contrôleur des dispositifs de commutation à semi-conducteur (6a, 6a', 6b, 6b', 6c, 6c').

12. Convertisseur (1) avec correction de facteur de puissance capable de fonctionner avec des lignes monophasées et triphasées selon la revendication 10, **caractérisé en ce que** le convertisseur final (17) est adapté pour alimenter des charges de courant continu avec isolation ou des charges de courant alternatif sans isolation.

13. Convertisseur (1) avec correction de facteur de puissance capable de fonctionner avec des lignes monophasées et triphasées selon l'une quelconque des revendications précédentes, **caractérisé en ce qu'**il est configuré de telle manière que, lorsque le convertisseur (1) est connecté à une source de courant alternatif indistinctement triphasée ou monophasée, la valeur du courant pour chacune des trois lignes d'entrée (u, v, w) au convertisseur (5) est substantiellement la même.

14. Source d'alimentation qui peut être connectée indistinctement à une ligne monophasée ou triphasée, **caractérisée en ce qu'**elle comprend un convertisseur selon l'une quelconque des revendications 1 à 13.

15. Equipement de rechargement de batterie qui peut être connecté indistinctement à une ligne monophasée ou triphasée, **caractérisé en ce qu'**il comprend un convertisseur selon l'une quelconque des revendications 1 à 13.
